# EUROPEAN PATENT SPECIFICATION

(11) **EP 2 574 523 B1**
(45) Date of publication and mention of the grant of the patent: **15.07.2015**
(21) Application number: 12185373.3
(22) Date of filing: 21.09.2012
(51) Int. Cl.: B62D 5/04, H02P 25/22, H02K 3/28

(54) **Vehicle steering system**
Fahrzeuglenksystem
Système de direction de véhicule

(30) Priority: 27.09.2011 JP 2011211130
(43) Date of publication of application: 03.04.2013
(73) Proprietor: JTEKT CORPORATION, Osaka-shi Osaka 542-8502 (JP)
(72) Inventor: Sugiyama, Toyoki, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 2 450 259
- WO-A1-2012/032395
- WO-A1-2012/046115
- WO-A1-2012/052817
- US-A- 5 982 067

## Description

### BACKGROUND OF THE INVENTION

### 1. Field of the Invention

The invention relates to a vehicle steering system that includes a control unit and an electric motor that applies torque to a steering shaft with the use of first field means and second field means that differ in number of turns.

### 2. Discussion of Background

A vehicle steering system described in Japanese Patent Application Publication No. 2010-115954 (JP 2010-115954 A) controls the magnitude of torque that is applied from an electric motor to a steering shaft on the basis of a steering torque, a steering speed and a vehicle speed.

In a vehicle that includes the above-described vehicle steering system, when a required torque is high, the power consumption of the vehicle steering system becomes excessively large.
A vehicle with an electronic power steering according to the preamble of claim 1 of the present invention is known from EP 2 450 259 A1.

### SUMMARY OF THE INVENTION

The invention provides a vehicle steering system, including a control unit which is able to reduce the power consumption of the vehicle steering system.

According to a feature of an example of the invention, in a control unit of a vehicle steering system that includes an electric motor that applies a torque to a steering shaft with the use of first field means and second field means that differ in number of turns, in which the control unit controls the torque of the electric motor on the basis of a steering torque, and controls, based on the steering torque, at least one of a current that is supplied to the first field means and a current that is supplied to the second field means.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic view that shows the overall structure of a vehicle steering system according to an embodiment of the invention;
FIG. 2 is a view that shows the configuration of an electric motor in the vehicle steering system according to the embodiment;
FIG. 3 is a graph that shows the correlation between a rotational speed of the electric motor and a rotary torque of the electric motor in the vehicle steering system according to the embodiment;
FIG. 4 is a flowchart that shows the procedure of a steering assist process executed by a control unit in the vehicle steering system according to the embodiment;
FIG. 5 is a sectional view that shows the sectional structure of part of an electric motor in a vehicle steering system according to an alternative embodiment of the invention; and
FIG. 6 is a graph that shows the correlation between a steering torque and a torque generated by a first field unit and the correlation between a steering torque and a torque generated by a second field unit in the vehicle steering system according to the alternative embodiment of the invention.

### DETAILED DESCRIPTION OF EMBODIMENTS

Hereinafter, embodiments of the invention will be described with reference to the accompanying drawings.

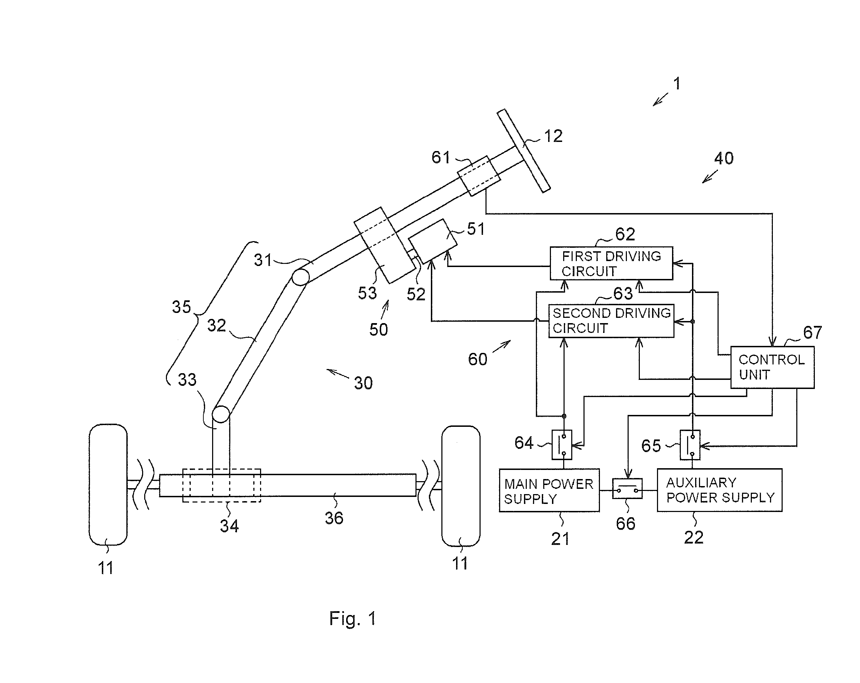

The configuration of a vehicle steering system 1 will be described with reference to FIG. 1. The vehicle steering system 1 includes a main power supply 21, an auxiliary power supply 22, a steering device 30 and a steering assist device 40. The steering device 30 changes the steered angle of steered wheels 11 in response to an operation of a steering wheel 12. The steering assist device 40 assists a driver in performing an operation of the steering wheel 12.

The steering device 30 includes a column shaft 31, an intermediate shaft 32, and a rack-and-pinion mechanism 34. The column shaft 31 and the intermediate shaft 32 transmit torque, input into the steering wheel 12, to a pinion shaft 33. The rack-and-pinion mechanism 34 transmits the rotation of the pinion shaft 33 to a rack shaft 36. A steering shaft 35 is formed of the column shaft 31, the intermediate shaft 32 and the pinion shaft 33.

The steering assist device 40 includes a steering assist actuator 50 and a steering assist control unit 60. The steering assist actuator 50 applies a torque τm to the column shaft 31. The steering assist control unit 60 controls the steering assist actuator 50.

The steering assist actuator 50 includes an electric motor 51, a rotor 52 of the electric motor 51, and a speed reduction mechanism 53. The speed reduction mechanism 53 reduces the speed of rotation of the rotor 52 and transmits the rotation with a reduced speed to the column shaft 31.

The electric motor 51 rotates the rotor 52 on the basis of a first motor current Ia supplied from a first driving circuit 62 or a second motor current Ib supplied from a second driving circuit 63. The speed reduction mechanism 53 reduces the speed of rotation of the rotor 52 and transmits the rotation with a reduced speed to the column shaft 31.

The steering assist control unit 60 includes a torque sensor 61, the first driving circuit 62, the second driving circuit 63, a main power supply relay 64, an auxiliary power supply relay 65, an auxiliary power supply charging relay 66, and a control unit 67.

The torque sensor 61 outputs a signal that indicates a steering torque τ that is a torque when the column shaft 31 rotates. The first driving circuit 62 is a three-phase inverter circuit that converts a direct current supplied from at least one of the main power supply 21 and the auxiliary power supply 22 to a three-phase alternating current having the magnitude corresponding to a first control signal Sa generated by the control unit 67, and that supplies the three-phase alternating current to the electric motor 51 as the first motor current Ia.

The second driving circuit 63 is a three-phase inverter circuit that converts a direct current supplied from at least one of the main power supply 21 and the auxiliary power supply 22 to a three-phase alternating current having the magnitude corresponding to a second control signal Sb generated by the control unit 67, and that supplies the three-phase alternating current to the electric motor 51 as the second motor current Ib.

The main power supply relay 64 changes the state of connection between the first and second driving circuits 62, 63 and the main power supply 21. The auxiliary power supply relay 65 changes the state of connection between the first and second driving circuits 62, 63 and the auxiliary power supply 22. The auxiliary power supply charging relay 66 changes the state of connection between the main power supply 21 and the auxiliary power supply 22.

The control unit 67 executes the following processes as a steering assist process. That is, the control unit 67 executes a process of outputting one of the first control signal Sa for controlling the first driving circuit 62 and the second control signal Sb for controlling the second driving circuit 63 on the basis of a signal output from the torque sensor 61. In addition, the control unit 67 executes a process of providing instructions on the connecting state to each of the main power supply relay 64, the auxiliary power supply relay 65 and the auxiliary power supply charging relay 66 on the basis of a signal output from the torque sensor 61.

The vehicle steering system 1 operates as follows. When the steering wheel 12 is rotated by a driver, the steering torque τ is generated in the column shaft 31. The torque τm of the electric motor 51 is applied to the column shaft 31 via the speed reduction mechanism 53. The column shaft 31 is rotated by the steering torque τ to which the torque τm is added. The rotation of the column shaft 31 is transmitted to the pinion shaft 33 via the intermediate shaft 32. The rotation of the pinion shaft 33 is converted by the rack-and-pinion mechanism 34 into an axial linear motion of the rack shaft 36. With the axial movement of the rack shaft 36, the orientation of the steered wheels 11 is changed.

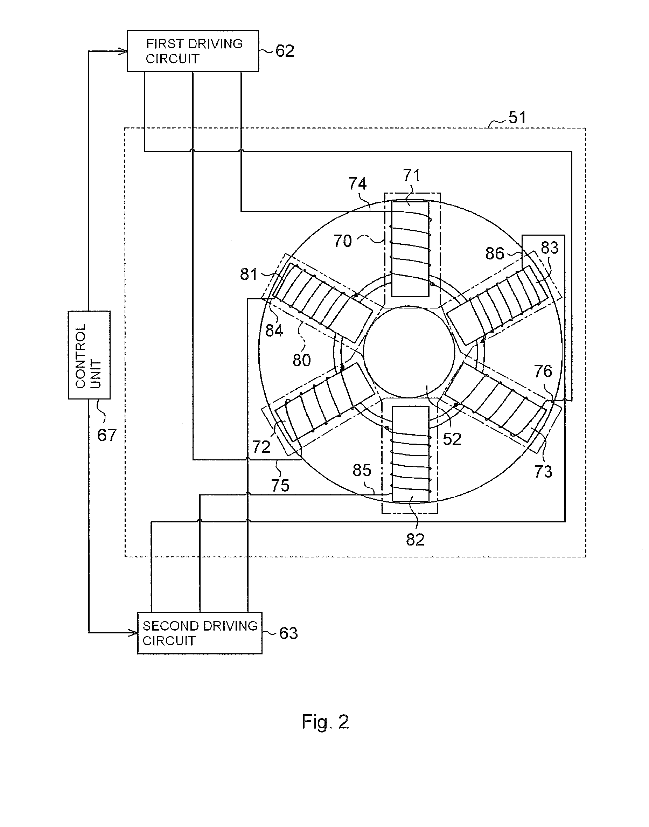

The configuration of the electric motor 51 will be described in detail with reference to FIG. 2. The electric motor 51 is a three-phase induction motor. The electric motor 51 includes a first field unit 70 and a second field unit 80 that generate magnetic force for rotating the rotor 52.

The first field unit 70 has a first U-phase tooth 71, a first V-phase tooth 72 and a first W-phase tooth 73. A first U-phase conductive wire 74 s that is connected to the first driving circuit 62 is wound around the first U-phase tooth 71. A first V-phase conductive wire 75 that is connected to the first driving circuit 62 is wound around the first V-phase tooth 72. A first W-phase conductive wire 76 that is connected to the first driving circuit 62 is wound around the first W-phase tooth 73. The number of turns of each of the conductive wires wound around the first U-phase tooth 71 to the first W-phase tooth 73 is a predetermined value Ka.

The second field unit 80 has a second U-phase tooth 81, a second V-phase tooth 82, and a second W-phase tooth 83. A second U-phase conductive wire 84 that is connected to the second driving circuit 63 is wound around the second U-phase tooth 81. A second V-phase conductive wire 85 that is connected to the second driving circuit 63 is wound around the second V-phase tooth 82. A second W-phase conductive wire 86 that is connected to the second driving circuit 63 is wound around the second W-phase tooth 83. The number of turns of each of the conductive wires wound around the second U-phase tooth 81 to the second W-phase tooth 83 is a predetermined value Kb that is larger than the predetermined value Ka.

In the following description, the first field unit 70 and the second field unit 80 will be collectively referred to as "field units". In addition, the first motor current Ia and the second motor current Ib will be collectively referred to as "motor currents".

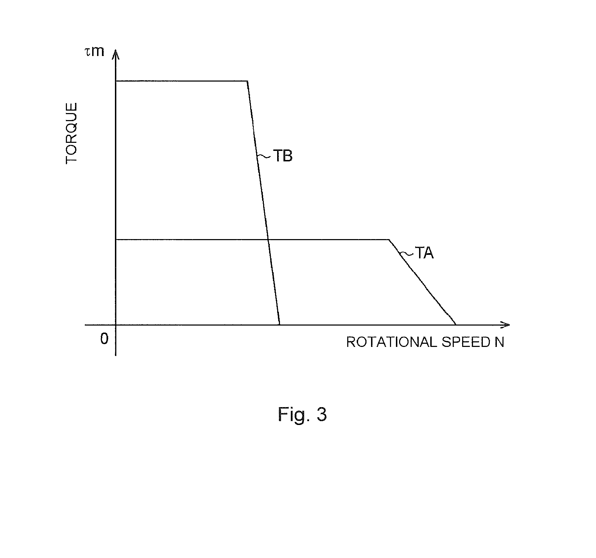

The characteristics of the electric motor 51 will be described with reference to FIG. 3. A first curve TA indicates a characteristic in a practical region, including a substantially linear portion of the characteristic indicating the correlation between the rotational speed N and the torque τm when the rotor 52 is rotated with the use of the first field unit 70. A second curve TB indicates a characteristic in a practical region, indicating the correlation between the rotational speed N and the torque τm when the rotor 52 is rotated with the use of the second field unit 80.

Because the number of turns of each conductive wire of the first field unit 70 is smaller than that of the second field unit 80, the maximum value of the rotational speed N when the first field unit 70 is used is higher than that when the second field unit 80is used, and the maximum value of the torque τm when the first field unit 70 is used is lower than that when the second field unit 80 is used. On the other hand, because the number of turns of each conductive wire of the second field unit 80 is larger than that of the first field unit 70, the maximum value of the rotational speed N when the second field unit 80 is used is lower than that when the first field unit 70 is used, and the maximum value of the torque τm when the second field unit 80 is used is higher than that when the first field unit 70 is used.

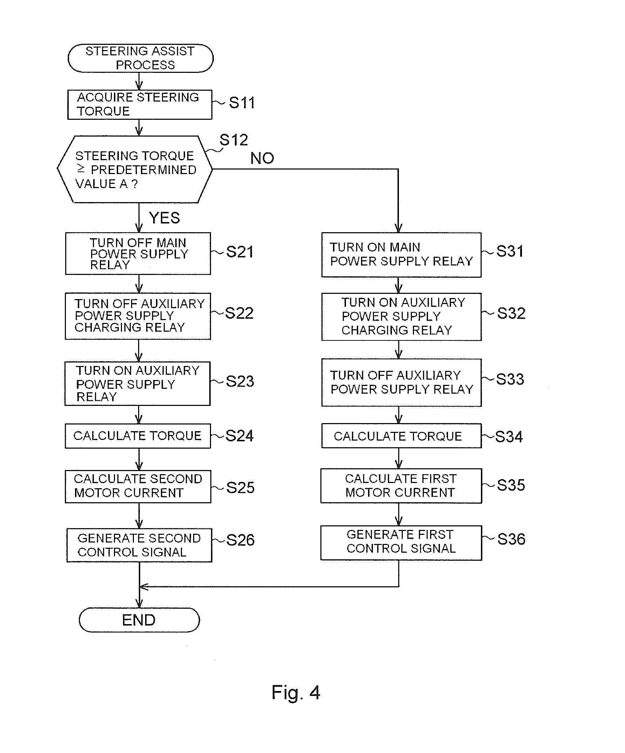

The details of the steering assist process executed by the control unit 67 will be described with reference to FIG. 4. The control unit 67 repeatedly executes the steering assist process at predetermined control intervals. That is, after the process reaches the end step, the process of step S11 is kept unexecuted until a predetermined control interval elapses, and the process of step S11 is executed again when the predetermined control interval has elapsed.

In step S11, the steering torque τ is acquired from the torque sensor 61. In step S12, it is determined whether the steering torque τ is higher than or equal to a predetermined value A. That is, it is determined whether the steering wheel 12 is being operated in one of a state where the vehicle is stopped and a state where the vehicle is travelling at a low speed. When an affirmative determination is made in step S12, the process proceeds to step S21. When a negative determination is made in step S12, the process proceeds to step S31.

In step S21, the main power supply relay 64 is turned off. That is, supply of electric power to the first driving circuit 62 and the second driving circuit 63 from the main power supply 21 is stopped. In step S22, the auxiliary power supply charging relay 66 is turned off. That is, charging of the auxiliary power supply 22 by the main power supply 21 is stopped.

In step S23, the auxiliary power supply relay 65 is turned on. That is, supply of electric power by the auxiliary power supply 22 to the first driving circuit 62 and the second driving circuit 63 is started. In step S24, the torque τm that is applied to the column shaft 31 is calculated. In this case, the torque τm that is proportional to the steering torque τ acquired in step S11 is calculated.

In step S25, the second motor current Ib is calculated such that the torque τm calculated in step S24 is output from the electric motor 51. In step S26, the second control signal Sb is generated such that the second motor current Ib calculated in step S25 is supplied from the second driving circuit 63 to the electric motor 51.

In step S31, the main power supply relay 64 is turned on. That is, supply of electric power by the main power supply 21 to the first driving circuit 62 and the second driving circuit 63 is started. In step S32, the auxiliary power supply charging relay 66 is turned on. That is, charging of the auxiliary power supply 22 by the main power supply 21 is started.

In step S33, the auxiliary power supply relay 65 is turned off. That is, supply of electric power by the auxiliary power supply 22 to the first driving circuit 62 and the second driving circuit 63 is stopped. In step S34, the torque τm that is applied to the column shaft 31 is calculated. In this case, the torque τm that is proportional to the steering torque τ acquired in step S 11 is calculated.

In step S35, the first motor current Ia is calculated such that the torque τm calculated in step S34 is output from the electric motor 51. In step S36, the first control signal Sa is generated such that the first motor current Ia calculated in step S35 is supplied from the first driving circuit 62 to the electric motor 51.

With the vehicle steering system 1 according to the present embodiment, the following advantageous effects are obtained.

The first field unit 70 is set as a field unit with small number of turns and the second field unit 80 is set as a field unit with large number of turns. The control unit 67 controls at least one of the motor current that is supplied to the field unit with large number of turns and the motor current that is supplied to the field unit with small number of turns, on the basis of the steering torque τ. In a case where a predetermined motor current is supplied, the torque τm generated when the field unit with large number of turns is used is higher than the torque τm generated when the field unit with small number of turns is used. Therefore, when the second motor current Ib that is supplied to the field unit with large number of turns is controlled on the basis of the steering torque τ, the required torque τm is generated with a motor current that is smaller than a motor current that is required to generate the required torque τm in the configuration that includes only one type of field unit. That is, it is possible to provide the control unit 67 for the vehicle steering system 1, which is able to reduce the power consumption of the vehicle steering system 1.

When the steering torque τ is higher than or equal to the predetermined value A, the control unit 67 supplies the second motor current Ib to the field unit with large number of turns and does not supply the first motor current Ia to the field unit with small number of turns. With this configuration, when a high torque τm is required, the second motor current Ib is supplied only to the field unit with large number of turns, and supply of the first motor current Ia to the field unit with small number of turns is stopped. Therefore, it is possible to reduce the power consumption of the vehicle steering system 1.

When the steering torque τ is lower than the predetermined value A, the control unit 67 supplies the first motor current Ia to only the field unit with small number of turns, and does not supply the second motor current Ib to the field unit with large number of turns. When the vehicle is travelling at a normal travelling speed, it is sometimes required to change the steered angle at a speed higher than that when the steering wheel 2 is operated while the vehicle is stopped or when the vehicle is travelling at a low speed. In addition, when the vehicle is travelling at a normal travelling speed, the steering torque τ is lower than that when the steering wheel 2 is operated while the vehicle is stopped or when the vehicle is travelling at a low speed. Therefore, in the above-described configuration, when the steering torque τ is lower than the predetermined value A, that is, when the vehicle is highly likely to be travelling at a normal travelling speed, the field unit with small number of turns is used. Therefore, it is possible to appropriately respond to a request regarding a speed of change in the steered angle.

The invention is not limited to the above-described embodiment, and the invention may be implemented in the following alternative embodiments. In addition, the following alternative embodiments are applied not only to the above-described embodiment, and the alternative embodiments may be implemented in combination.

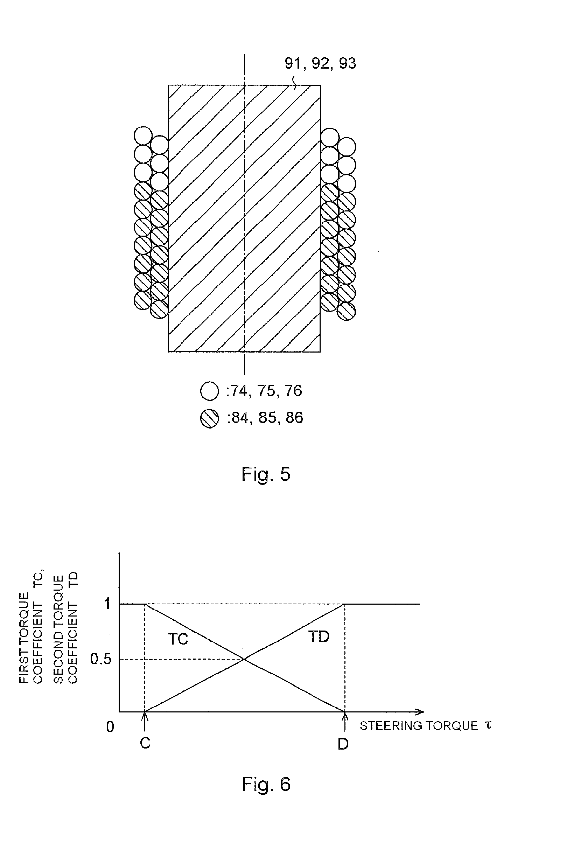

In the above-described embodiment, the first U-phase conductive wire 74 to the first W-phase conductive wire 76 and the second U-phase conductive wire 84 to the second W-phase conductive wire 86 are respectively wound around the different teeth. Alternatively, as shown in FIG. 5, conductive wires of the same phase may be wound around a single tooth. In this case, the first U-phase conductive wire 74 and the second U-phase conductive wire 84 are wound around a single U-phase tooth 91. The first V-phase conductive wire 75 and the second V-phase conductive wire 85 are wound around a single V-phase tooth 92. The first W-phase conductive wire 76 and the second W-phase conductive wire 86 are wound around a single W-phase tooth 93.

In the above-described embodiment, one of the first field unit 70 and the second field unit 80 is used on the basis of the result of determination as to whether the steering torque τ is higher than or equal to the predetermined value A. Alternatively, the first field unit 70 and the second field unit 80 may be used as follows. The calculated torque τm is regarded as the total torque. Then, the proportion of the torque generated by the first field unit 70 to the total torque and the proportion of the torque generated by the second field unit 80 to the total torque are determined on the basis of the steering torque τ. That is, the control unit 67 is able to control currents respectively supplied to the field unit with large number of turns and the field unit with small number of turns, on the basis of the steering torque τ.

FIG. 6 is a graph in which the proportion of the torque, generated by the field unit with small number of turns, to the total torque is indicated by a first torque coefficient TC, and the proportion of the torque, generated by the field unit with large number of turns, to the total torque is indicated by a second torque coefficient TD. As shown in FIG. 6, when the steering torque τ is higher than or equal to a predetermined value C, the second motor current Ib is determined such that as the total torque that is the torque τm required of the electric motor 51 increases, the proportion of the torque generated by the field unit with large number of turns to the total torque increases on the basis of the difference between the steering torque τ and the predetermined value C. In this case, the proportion of the torque generated by the field unit with small number of turns may be set such that the proportion becomes zero when the steering torque τ is higher than or equal to a predetermined value D that is higher than the predetermined value C.

The torque τm required of the electric motor 51 changes depending on the steering torque τ. On the other hand, in terms of power consumption, it is preferable to increase the proportion of the torque, generated by the field unit with large number of turns, to the torque τm of the electric motor 51 with an increase in the torque τm required of the electric motor 51. Therefore, in the above-described configuration, the proportions of the torques, respectively generated by the field units, to the torque τm of the electric motor 51 are determined on the basis of the steering torque τ. Therefore, it is possible to further enhance the effect of reducing power consumption through the usage of the field unit with large number of turns.

In the above-described embodiment, using only the result of comparison between the steering torque τ and the predetermined value A, the field unit that is used to drive the electric motor 51 is selected from the first field unit 70 and the second field unit 80 and the power supply that is used to supply electric power is selected from the main power supply 21 and the auxiliary power supply 22. However, different predetermined values may be used for determination of the field unit that is used and for determination of the power supply that is used. For example, a predetermined value A may be used for determination of the field unit that is used and a predetermined value B may be used for determination of the power supply that is used.

In the above-described embodiment, only the result of comparison between the steering torque τ and the predetermined value A is used to determine whether the steering wheel 12 is being operated while the vehicle is stopped or the vehicle is travelling at a low speed. Alternatively, the determination may be made on the basis of the result of comparison between the travelling speed V of the vehicle and a predetermined value E in addition to the result of comparison between the steering torque τ and the predetermined value A. In this case, when the steering torque τ is higher than or equal to the predetermined value A and the travelling speed V is lower than the predetermined value E, it is determined that the steering wheel 12 is being operated while the vehicle is stopped or the vehicle is travelling at a low speed, and the second field unit 80 is used. Otherwise, the first field unit 70 is used.

In the above-described embodiment, it is determined on the basis of the steering torque τ which of the first field unit 70 and the second field unit 80 is used. Alternatively, a configuration where when a failure of one of the field units has been detected, the other one of the field units is used may be employed. Examples of a failure of the field unit may include a break of one of coils of the field unit, a short-circuit of one of switching elements of the driving device that drives the field unit, and a stuck-open failure of one of the switching elements.

In the above-described embodiment, when the steering torque τ is higher than or equal to the predetermined value A, only the auxiliary power supply 22 is used. Alternatively, in this case, the main power supply 21 may be used in combination with the auxiliary power supply 22.

## Claims

1. A vehicle steering system (1) that includes a control unit (67) and an electric motor (51) that applies a torque (τₘ) to a steering shaft (35) using first field unit (70) and second field unit (80), the control unit (67) controlling the torque (τₘ) of the electric motor (51) based on a steering torque (τ) that is a torque input into the steering shaft (35) in response to an operation of a steering wheel (12), **characterized in that**
the first field unit (70) and the second field unit (80) differ in number of turns; and
the control unit (67) controls, based on the steering torque (τ), at least one of a current (Ib) that is supplied to field unit (80) with large number of turns and a current (Ia) that is supplied to field unit (70) with small number of turns, the field unit (80) with large number of turns being one of the first field unit (70) and the second field unit (80), which has a larger number of turns than the other field unit (70), and the field unit (70) with small number of turns being the other one of the first field unit (70) and the second field unit (80), which has a smaller number of turns than the one of the field unit (80).

2. The vehicle steering system (1) according to claim 1, wherein
when the steering torque (τ) is higher than or equal to a predetermined value (A), a current (Ib) is supplied to the field unit (80) with large number of turns, and no current (Ia) is supplied to the field unit (70) with small number of turns.

3. The vehicle steering system (1) according to claim 2, wherein
when the steering torque (τ) is lower than the predetermined value (A), a current (Ia) is supplied to the field unit (70) with small number of turns, and no current (Ib) is supplied to the field unit (80) with large number of turns.

4. The vehicle steering system (1) according to claim 1, wherein
a proportion of a torque (TD) that is generated by the field unit (80) with large number of turns to an output torque of the electric motor (51) and a proportion of a torque (TC) that is generated by the field unit (70) with small number of turns to the output torque of the electric motor (51) are changed based on the steering torque (τ).

5. The vehicle steering system (1) according to any one of claims 1 to 4, **characterising by** including a main power supply (21) and an auxiliary power supply (22) that are individually connected to each of the field unit (80) with large number of turns and the field unit (70) with small number of turns; and in that the steering torque (τ) is higher than or equal to a predetermined value (B), a current is supplied from the auxiliary power supply (21) to at least one of the field unit (80) with large number of turns and the field unit (70) with small number of turns.

## Patentansprüche

1. Fahrzeuglenksystem (1), welches eine Regelungseinheit (67) und einen elektrischen Motor (51) beinhaltet, der durch Nutzung einer ersten Feldeinheit (70) und einer zweiten Feldeinheit (80) ein Drehmoment (τₘ) auf eine Lenkwelle (35) aufbringt, wobei die Regelungseinheit (67) das Drehmoment (τₘ) des elektrischen Motors (51) basierend auf einem Lenkdrehmoment (τ) regelt, das ein Eingangsdrehmoment für die Lenkwelle (35) ist als Reaktion auf eine Betätigung eines Lenkrads (12), **dadurch gekennzeichnet, dass**
die erste Feldeinheit (70) und die zweite Feldeinheit (80) sich in der Windungszahl unterscheiden; und
die Regelungseinheit (67), basierend auf dem Lenkdrehmoment (τ), mindestens einen von einem elektrischen Strom (Ib), welcher der Feldeinheit (80) mit großer Windungszahl zugeführt wird, und einem elektrischen Strom (la), welcher der Feldeinheit (70) mit kleiner Windungszahl zugeführt wird, regelt, wobei die Feldeinheit (80) mit großer Windungszahl eine der ersten Feldeinheit (70) und der zweiten Feldeinheit (80) ist, die eine größere Windungszahl aufweist als die andere Feldeinheit (70), und die Feldeinheit (70) mit kleiner Windungszahl die andere der ersten Feldeinheit (70) und der zweiten Feldeinheit (80) ist, die eine kleinere Windungszahl als die der Feldeinheit (80) aufweist.

2. Fahrzeuglenksystem (1), gemäß Anspruch 1, wobei,
wenn das Lenkdrehmoment (τ) größer oder gleich einem vorbestimmten Wert (A) ist, ein elektrischer Strom (Ib) der Feldeinheit (80) mit großer Windungszahl zugeführt wird, und der Feldeinheit (70) mit kleiner Windungszahl kein elektrischer Strom (Ia) zugeführt wird.

3. Fahrzeuglenksystem (1), gemäß Anspruch 2, wobei,
wenn das Lenkdrehmoment (τ) kleiner als der vorbestimmte Wert (A) ist, ein elektrischer Strom (Ia) der Feldeinheit (70) mit kleiner Windungszahl zugeführt wird, und der Feldeinheit (80) mit großer Windungszahl kein elektrischer Strom (Ib) zugeführt wird.

4. Fahrzeuglenksystem (1), gemäß Anspruch 1, wobei
ein Verhältnis von einem Drehmoment (TD), welches durch die Feldeinheit (80) mit großer Windungszahl erzeugt wird, zu einem Abtriebsdrehmoment des elektrischen Motors (51) und ein Verhältnis von einem Drehmoment (TC), welches durch die Feldeinheit (70) mit kleiner Windungszahl erzeugt wird, zum Abtriebsdrehmoment des elektrischen Motors (51) basierend auf dem Lenkdrehmoment (τ) verändert werden.

5. Fahrzeuglenksystem (1), gemäß einem der Ansprüche 1 bis 4, **gekennzeichnet durch** das Beinhalten
einer Hauptstromversorgung (21) und einer Hilfsstromversorgung (22), die individuell mit beiden, der Feldeinheit (80) mit großer Windungszahl und der Feldeinheit (70) mit kleiner Windungszahl, verbunden sind; und
**dadurch**, dass das Lenkdrehmoment (τ) größer oder gleich einem vorbestimmten Wert (B) ist, ein elektrischer Strom von der Hilfsstromversorgung (22) mindestens einer von der Feldeinheit (80) mit großer Windungszahl und der Feldeinheit (70) mit kleiner Windungszahl, zugeführt wird.

## Revendications

1. Système de direction de véhicule (1) qui inclut une unité de commande (67) et un moteur électrique (51) qui applique un couple (τₘ) à un arbre de direction (35) en utilisant une première unité de champ (70) et une seconde unité de champ (80), l'unité de commande (67) commandant le couple (τₘ) du moteur électrique (51) en fonction d'un couple de direction (τ) qui est un couple entré dans l'arbre de direction (35) en réponse à un actionnement du volant de direction (12), **caractérisé en ce que**
la première unité de champ (70) et la seconde unité de champ (80) diffèrent en nombre de tours ; et
l'unité de commande (67) commande, en fonction du couple de direction (τ), au moins l'un d'un courant (Ib) qui est fourni à l'unité de champ (80) avec un grand nombre de tours et d'un courant (Ia) qui est fourni à l'unité de champ (70) avec un petit nombre de tours, l'unité de champ (80) avec un grand nombre de tours étant l'une de la première unité de champ (70) et la seconde unité de champ (80), qui a un nombre plus grand de tours que l'autre unité de champ (70), et l'unité de champ (70) avec le petit nombre de tours étant l'autre de la première unité de champ (70) et de la seconde unité de champ (80), qui a un nombre de tours plus petit que l'une de l'unité de champ (80).

2. Système de direction de véhicule (1) selon la revendication 1, dans lequel
quand le couple de direction (i) est supérieur ou égal à une valeur prédéterminée (A), un courant (Ib) est fourni à l'unité de champ (80) avec un grand nombre de tours, et aucun courant (Ia) n'est fourni à l'unité de champ (70) avec un petit nombre de tours.

3. Système de direction de véhicule (1) selon la revendication 2, dans lequel
quand le couple de direction (τ) est inférieur à la valeur prédéterminée (A), un courant (Ia) est fourni à l'unité de champ (70) avec un petit nombre de tours, et aucun courant (Ib) n'est fourni à l'unité de champ (80) avec un grand nombre de tours.

4. Système de direction de véhicule (1) selon la revendication 1, dans lequel
une proportion d'un couple (TD) qui est généré par l'unité de champ (80) avec un grand nombre de tours sur un couple de sortie du moteur électrique (51) et une proportion d'un couple (TC) qui est généré par l'unité de champ (70) avec un petit nombre de tours sur le couple de sortie du moteur électrique (51) sont changées en fonction du couple de direction (τ).

5. Système de direction de véhicule (1) selon l'une quelconque des revendications 1 à 4, **caractérisé en ce qu'**il inclut une alimentation en courant principale (21) et une alimentation en courant auxiliaire (22) qui sont connectées individuellement à chacune de l'unité de champ (80) avec un grand nombre de tours et de l'unité de champ (70) avec un petit nombre de tours ; et
**en ce que** le couple de direction (τ) est supérieur ou égal à une valeur prédéterminée (B), un courant est fourni depuis l'alimentation en courant principale (21) à au moins l'une de l'unité de champ (80) avec un grand nombre de tours et de l'unité de champ (70) avec un petit nombre de tours.
